# DEMANDE DE BREVET EUROPEEN

(11) **EP 3 182 285 A1**
(43) Date de publication de la demande: **21.06.2017**
(21) Numéro de dépôt: 16204498.6
(22) Date de dépôt: 15.12.2016
(51) Int. Cl.: G06F 9/50, G06F 9/445

(54) **PROCÉDÉ D'INITIALISATION RAPIDE D'UN DISPOSITIF DE TRAITEMENT DE DONNÉES TACTIQUES**

(30) Priorité: 18.12.2015 FR 1502630
(71) Demandeur: Bull SAS, 78340 Les Clayes-sous-Bois (FR)
(72) Inventeur: FLEUR, Benjamin, 83000 Toulon (FR)
(74) Mandataire: Cabinet Camus Lebkiri

(57) **Abrégé**

L'invention a pour objet un procédé d'initialisation rapide d'un dispositif de traitement de données tactiques caractérisé en ce qu'il comporte les étapes suivantes :
- Production d'un support d'installation démarrable adapté à un ensemble réduit de dispositifs de traitement de données ;
- Déverrouillage d'une interface de lecture d'un support pour autoriser l'exécution d'application à travers l'interface depuis un support connecté à l'interface ;
- Connexion du support d'installation à l'interface de lecture déverrouillée ;
- Démarrage du dispositif de traitement de données tactiques ;
- Sélection d'un profil parmi une liste de profil possible ;
- Exécution d'une installation via l'exécution d'une pluralité de commandes, la pluralité de commandes dépendant d'un profil sélectionné ;
- Verrouillage de l'interface de lecture d'un support pour interdire l'exécution d'application à travers l'interface.

## Description

### Domaine technique de l'invention

Le domaine de l'invention est celui du déploiement d'une configuration sur un dispositif de traitement de données tactiques. Plus précisément le domaine de l'invention est celui de l'obtention d'un dispositif opérationnel en temps contraint. Le domaine de l'invention est aussi celui de l'obtention d'un dispositif opérationnel sur un théâtre d'opération militaire.

Un tel dispositif de traitement de données respecte des prérequis généralement spécifiés par un état pour les systèmes militaires.

Dans le présent texte on entend par dispositif de traitement de données tout dispositif capable de traiter des données ce qui inclue, de manière non limitative, les téléphones dits intelligents, les tablettes, les ordinateurs fixes et portables.

### Etat de la technique antérieur

Il existe des circonstances dans lesquelles la mise à disposition d'un dispositif de traitement de données tactiques est vitale. De telles circonstances sont, par exemple, l'engagement de forces armées sur un théâtre d'opération. Dans ces circonstances chaque unité engagée doit être dotée de matériel adapté à sa mission et à jour.

Dans la pratique on connait principalement trois modes d'installation.

Un premier mode est le mode classique dans lequel un utilisateur administrateur installe le dispositif de traitement en effectuant les étapes suivantes :
- Rendre accessible en lecture, dans une séquence appropriée, les supports d'installation des différents composants requis, il s'agit en générale de disque dvd, disque blu-ray, disque amovible...
- Pour chaque support, exécuter un programme d'installation présent sur le support ;
- Pour chaque support, répondre aux sollicitations du programme d'installation.
- Pour chaque support, effectuer le paramétrage pour rendre la ou les applications installées via le support utilisables.

Ce premier mode requiert donc la manipulation de plusieurs supports et l'attention de l'utilisateur réalisant l'initialisation qui doit correctement répondre aux questions qui lui sont posées, par le programme d'installation, au cours de la procédure. Nombre de ces questions sont spécifiques au domaine de l'informatique et ne relèvent pas du métier de la personne que l'on souhaite voir effectuer l'initialisation.

Un second mode d'installation consiste à fournir, quand c'est possible, un fichier de réponses aux questions. Un tel fichier est associé au programme d'installation qui l'utilise comme paramètre. Le programme d'installation lit alors les réponses aux questions dans le fichier ce qui dispense l'utilisateur réalisant l'installation d'avoir à le faire.

Ces deux modes présentent deux inconvénients majeurs. Le premier inconvénient est la manipulation de plusieurs supports. Cela implique, dans un environnement potentiellement stressant, des risques non négligeables de se tromper de support, ou de se tromper dans l'ordre d'utilisation des supports.

On pourrait penser que ce problème est simple à résoudre : il suffit de réaliser une initialisation une fois, puis de créer une image binaire de l'initialisation finalisée. Il n'y aurait alors plus qu'à copier cette image binaire sur les dispositifs à initialiser. Le problème ne serait cependant résolu qu'en apparence puisqu'il faudrait gérer plusieurs images : une par dispositif de traitement de données possible. C'est-à-dire une par configuration matérielle. Cela serait donc équivalent à la manipulation de plusieurs supports.

Un fois ces solutions envisagées, on constate que le temps d'initialisation est trop long en termes d'immobilisation du dispositif de traitement de données. Il apparaît, après analyse, que la quantité de données à copier est très importante : au moins une dizaine de giga-octets ce qui, en fonction des performances d'une interface de communication peut représenter jusqu'à plusieurs heures de transmissions.

On utilise les mots installation et initialisation. Dans ce document une initialisation est l'action de rendre un dispositif opérationnel, c'est-à-dire de lui appliquer une configuration initiale. Une initialisation d'un dispositif inclut un formatage de moyens de stockage et une ou plusieurs installations d'application. Une installation d'un dispositif n'implique pas forcément de formatage.

### Exposé de l'invention

L'invention vise à remédier à tout ou partie des inconvénients de l'état de la technique identifiés ci-dessus, et notamment à proposer des moyens pour permettre de limiter les données copiées lors d'une initialisation et à mettre une telle initialisation à la portée de non expert de la maintenance informatique.

Dans ce dessein, un aspect de l'invention se rapporte à procédé d'initialisation rapide d'un dispositif de traitement de données tactiques caractérisé en ce qu'il comporte les étapes suivantes :
- Production d'un support d'installation démarrable adapté à un ensemble réduit de dispositifs de traitement de données ;
- Déverrouillage d'une interface de lecture d'un support pour autoriser l'exécution d'application à travers l'interface depuis un support connecté à l'interface ;
- Connexion du support d'installation à l'interface de lecture déverrouillée ;
- Démarrage du dispositif de traitement de données tactiques ;
- Sélection d'un profil parmi une liste de profils possibles ;
- Exécution d'une installation via l'exécution d'une pluralité de commandes, la pluralité de commandes dépendant du profil sélectionné ;
- Verrouillage de l'interface de lecture d'un support pour interdire l'exécution d'application à travers l'interface.

Outre les caractéristiques principales qui viennent d'être mentionnées dans le paragraphe précédent, le procédé selon l'invention peut présenter une ou plusieurs caractéristiques complémentaires parmi les suivantes, considérées individuellement ou selon les combinaisons techniquement possibles:
- Une commande correspond à l'installation d'une application ;
- Une commande d'installation d'une application force l'installation en mode silencieux ;
- Une commande correspond au partitionnement de moyens de stockage du dispositif de traitement de données ;
- Une commande correspond au chiffrement de tout ou partie de moyens de stockage du dispositif de traitement de données ;
- Une commande correspond à la création d'un compte de gestion du dispositif de traitement de données ;
- Le mot de passe du compte de gestion est lié au support d'installation ;
- Une commande correspond à une action de configuration d'une application

### Brève description des figures

D'autres caractéristiques et avantages de l'invention ressortiront à la lecture de la description qui suit, en référence aux figures annexées, qui illustrent :
- La figure 1 : une vue simplifiée d'un dispositif de traitements de données tactiques ;
- La figure 2 : une illustration d'étape du procédé selon l'invention.

Pour plus de clarté, les éléments identiques ou similaires sont repérés par des signes de référence identiques sur l'ensemble des figures.

L'invention sera mieux comprise la lecture de la description qui suit et à l'examen des figures qui l'accompagnent. Celles-ci sont présentées à titre indicatif et nullement limitatif de l'invention

### Description détaillée d'un mode de réalisation

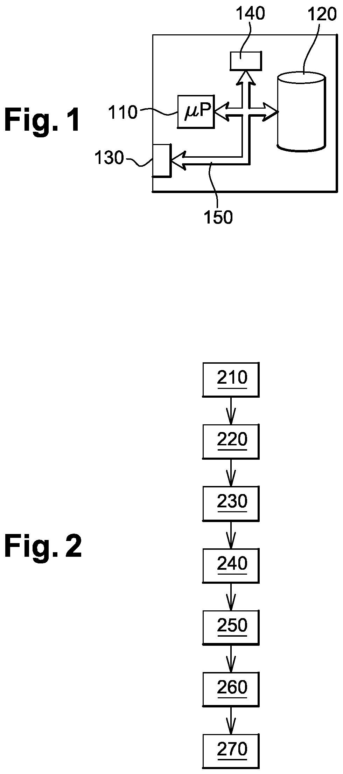

La figure 1 montre un dispositif 100 de traitement de données tactiques. Le dispositif 100 de traitement de données tactiques comporte :
- Un microprocesseur 110 ;
- Des moyens de stockage 120, par exemple un disque dur qu'il soit local ou distant, qu'il soit simple ou en grille (par exemple RAID) ;
- Une interface 130 de communication, par exemple un port USB ou un lecteur de media optique apte à permettre la lecture d'un support de données ;
- Un composant 140 microcode comportant des codes instructions et une configuration pour le démarrage du dispositif 100 de traitement de données tactiques.

Le microprocesseur 110 du dispositif 100 de traitement de données tactiques, les moyens 120 de stockage du dispositif 100 de traitement de données tactiques, l'interface 130 de communication du dispositif 100 de traitement de données tactiques et le composant 140 microcode du dispositif 100 de traitement de données tactiques sont interconnectés par un bus 150.

Lorsque l'on prête une action à un dispositif celle-ci est en fait effectuée par un microprocesseur du dispositif commandé par des codes instructions enregistrés dans une mémoire du dispositif. Si l'on prête une action à une application, celle-ci est en fait effectuée par un microprocesseur du dispositif dans une mémoire duquel les codes instructions correspondant à l'application sont enregistrés. Lorsqu'un dispositif, ou une application émet un message, ce message est émis via une interface de communication dudit dispositif ou de la dite application.

Le but de l'invention est de permettre le transfert rapide de données lues via l'interface de communication du dispositif de traitement de données tactiques vers les moyens de stockages du dispositif de traitement de données tactiques. Ces données correspondent à :
- Un système d'exploitation ;
- Au moins une application tactique permettant la gestion de tout ou partie d'un théâtre d'opération militaire ;
- Des éléments de configuration rendant les applications exploitables.

La figure 2 montre une étape 210 de production d'un support d'initialisation auto exécutable adapté à un ensemble réduit de dispositif de traitements de données. Dans la mesure où ce support d'initialisation permet des installations, on le nomme également support d'installation. Cet ensemble réduit et aussi appelé un parc spécifique. Cette étape 210 est une étape préalable qui permet d'obtenir un support d'installation allégée par rapport au support du domaine de la technique.

En effet dans le domaine de la technique la tendance est à la résolution des problèmes d'installation par une universalité adaptative. Cela signifie que lorsque l'on produit un media d'installation on cherche à le rendre aussi universel que possible. C'est-à-dire on chercher à faire en sorte qu'il soit capable de prendre en compte toutes les configurations matérielles possibles. De la même manière, lorsque l'on effectue une installation à partir d'un tel media universel, on copie l'intégralité des données sur le dispositif sujet de l'installation. Cela rend l'installation adaptative : si on change la configuration matérielle après l'installation alors les pilotes correspondant à ce changement seront probablement trouvés parmi les données copiées lors de l'installation.

A contrario dans l'invention on résout une partie des problèmes par la spécialisation du support d'installation : il ne comporte que les pilotes et autres données pertinentes pour un parc de matériels spécifique. Ce parc est connu à priori car il a été décrit dans un cahier des charges utilisé pour le développement des applications à installer. Ce cahier des charges est donc utilisé pour établir une liste des composants logiciel requis pour pouvoir prendre en charge les dispositifs de traitements de données tactiques listés dans ce parc. Une telle liste comporte une liste de modèles de matériel, ainsi que, pour chaque modèle, une liste d'au moins une version de ces matériels. On a donc un nombre réduit de configurations à prendre en compte. Ce nombre est le cardinal de la liste des versions. Lors d'une installation il y a aussi une détection des types de matériels afin d'effectuer des actions spécifiques à ce matériel. Cette détection porte, par exemple, sur :
- Les périphériques d'entrée/sortie : écran tactile ou non, dispositif de pointage,...
- Connectivité ;
- Tailles de l'écran ;

Pour un modèle donnée, le matériel varie d'une version à l'autre par, par exemple, la taille de l'écran, la taille du disque dur, le processeur.... Il faut donc des pilotes différents d'une version du modèle à l'autre.

Par exemple dans l'étape 210 on exclut du support d'installation :
- Les pilotes correspondant à des matériels qui ne seront jamais utilisés avec les dispositifs de traitement de données tactiques ;
- Les polices de caractères qui ne sont pas utilisés par les applications tactiques ;
- Les applications non métier, comme les jeux ;

Le support d'installation produit est un support démarrable, c'est-à-dire un support à partir duquel un dispositif peut effectuer sa séquence de démarrage lorsqu'il est mis sous tension.

L'étape 210 de production du support d'installation est réalisée par des opérateurs techniques dont le métier est la production de support d'installation. Une fois produit le support d'installation est confié à ceux qui devront l'utiliser et qui n'ont aucune connaissance particulière en maintenance informatique. Il s'agit d'utilisateurs opérationnels dont le métier est le combat, pas la maintenance informatique. En particulier le support d'installation comporte un script d'installation automatiquement exécuté au démarrage du dispositif de traitement de données tactiques auquel il est connecté. Les caractéristiques ce script se déduisent de la description de procédé qui suit.

De l'étape 210 de production du support d'installation on passe à une étape 220 de déverrouillage de l'interface de lecture. Dans cette étape un utilisateur opérationnel démarre le dispositif de traitement de données tactique selon une procédure prédéterminée, au cours de laquelle les codes instructions exécutés sont lus dans le composant microcode, ce qui permet d'entrer dans un menu à partir duquel il est possible de configurer le comportement de l'interface 130 de communication. Dans l'étape 220 de déverrouillage l'interface de communication est configurée pour autoriser le démarrage à partir d'un support connecté à cette interface de communication.

De l'étape 220 de déverrouillage on passe à une étape 230 de connexion du support d'installation à l'interface de lecture. Ici connecter signifie :
- Raccorder un disque dur externe ou une clé USB à un port USB, ou
- Insérer un disque dans un lecteur optique, ou
- Accès au support via une connexion réseau, l'installation de faisant alors en utilisant le protocole PXE.

De l'étape 230 de connexion du support on passe à une étape 240 de démarrage du dispositif de traitement de données tactiques. On note ici qu'il peut s'agir d'un redémarrage, le but de l'étape est de forcer le dispositif de traitement de données tactiques à effectuer sa séquence de démarrage dans la nouvelle configuration fixée aux étapes précédentes. Le résultat de cette séquence de démarrage est que le dispositif de traitement de données tactiques considère le support d'installation comme sa partition de démarrage et exécute les codes instructions enregistrés sur le support d'installation. A partir de cette étape le processus d'initialisation est contrôlé par les codes instructions du support d'installation et plus particulièrement par le script d'installation.

On passe alors à une étape 250 dans laquelle le script d'installation provoque l'affichage d'une boîte de dialogue invitant l'utilisateur opérationnel à effectuer un choix parmi une liste de profils. Ces profils correspondent aux différents rôles des utilisateurs opérationnels. Ce n'est donc pas un choix informatique, mais un choix métier que peut comprendre l'utilisateur opérationnel. Une fois ce choix validé, on passe à l'étape suivante et l'installation se poursuit silencieusement, c'est-à-dire sans autre sollicitation de l'utilisateur opérationnel.

On passe alors à une étape 260 d'exécution d'une installation, cette exécution d'une pluralité de commandes, les commandes exécutées dépendant du choix validé à l'étape précédente.

Au moins une des commandes exécutée à l'étape d'exécution de l'installation correspond à l'installation d'un système d'exploitation. Cette installation de système d'exploitation est rapide car :
- Le support d'installation est adapté et comporte une quantité réduite de données à copier pour réaliser l'installation ;
- Toutes les options sont pré alimentées via des paramètres de script, donc pas de sollicitation au cours de l'installation.

Au moins une des commandes exécutée à l'étape d'exécution de l'installation correspond à l'installation d'une application métier. Cette commande est telle que l'installation se déroule en mode silencieux.

Pour les cas ou mode silencieux n'est pas disponible les sollicitations correspondent à des questions métiers, ou les réponses sont suggérées.

Dans une variante de l'invention une des commandes exécutée à l'étape d'exécution de l'installation correspond à la mise en place d'une configuration pour l'utilisation d'une application qui a été ou sera installée. Une telle configuration comporte, par exemple :
- Une base de données, quelle que soit sa forme : relationnelle, hiérarchique ou autre. Il peut s'agir d'une base de données correspondant à un moteur de base de données, ou un ensemble de fichiers, par exemple des fichiers au format XML.
- Une valeur pour une variable d'environnement ;
- Une planification de tâche ;
- La configuration d'un service ;
- La création d'un raccourci ou d'un menu ;

Dans une variante de l'invention une des commandes exécutée à l'étape d'exécution de l'installation correspond à un partitionnement des moyens de stockage du dispositif de traitement de données tactiques. Ce partitionnement est accompagné d'un formatage.

Dans une variante de l'invention une des commandes exécutée à l'étape d'exécution de l'installation correspond à un chiffrement tout ou partie de moyens de stockage du dispositif de traitement de données. Par partie on entend une partition, un répertoire ou un fichier.

Dans une variante de l'invention une des commandes exécutée à l'étape d'exécution de l'installation correspond à la création d'un compte permettant à un utilisateur d'ouvrir une session sur le dispositif de traitement de données tactiques une fois l'initialisation terminée.

Les commandes exécutées sont donc de multiples natures. Certaines d'entre elles sont liées à une étape de détection de matériel notamment des installations de pilotes pour la prise en charge de périphériques comme des écrans, des carte de connexion, ou des dispositifs de pointage

Le compte créé est, par exemple, un compte administrateur. Le mot de passe correspondant au compte créé est obtenu depuis le support d'installation, chaque support d'installation ayant un mot de passe différent. Le mot de passe est enregistré chiffré sur le support d'installation au moment de la production du support.

Une fois toutes les commandes du script d'installation exécutées, on passe à une étape 270 de verrouillage de l'interface de communication. Il s'agit de l'étape inverse de l'étape de déverrouillage.

Dans une variante de l'invention les étapes de déverrouillage et de verrouillage sont conditionnées par une procédure particulière, par exemple la saisie d'un mot de passe.

## Revendications

1. Procédé d'initialisation rapide d'un dispositif de traitement de données tactiques **caractérisé en ce qu'**il comporte les étapes suivantes :
- Production (210) d'un support d'installation démarrable adapté à un ensemble réduit de dispositifs de traitement de données ;
- Déverrouillage (220) d'une interface de lecture d'un support pour autoriser l'exécution d'application à travers l'interface depuis un support connecté à l'interface ;
- Connexion (230) du support d'installation à l'interface de lecture déverrouillée ;
- Démarrage (240) du dispositif de traitement de données tactiques ;
- Sélection (250) d'un profil parmi une liste de profils possibles ;
- Exécution (260) d'une installation via l'exécution d'une pluralité de commandes, la pluralité de commandes dépendant du profil sélectionné ;
- Verrouillage (270) de l'interface de lecture d'un support pour interdire l'exécution d'application à travers l'interface.

2. Procédé d'initialisation rapide d'un dispositif de traitement de données tactiques selon la revendication 1, **caractérisé en ce qu'**une commande correspond à l'installation d'une application.

3. Procédé d'initialisation rapide d'un dispositif de traitement de données tactiques selon la revendication 2, la commande d'installation d'une application force l'installation en mode silencieux.

4. Procédé d'initialisation rapide d'un dispositif de traitement de données tactiques selon l'une des revendications précédente, **caractérisé en ce qu'**une commande correspond au partitionnement de moyens de stockage du dispositif de traitement de données.

5. Procédé d'initialisation rapide d'un dispositif de traitement de données tactiques selon l'une des revendications précédente, **caractérisé en ce qu'**une commande correspond au chiffrement de tout ou partie de moyens de stockage du dispositif de traitement de données.

6. Procédé d'initialisation rapide d'un dispositif de traitement de données tactiques selon l'une des revendications précédente, **caractérisé en ce qu'**une commande correspond à la création d'un compte de gestion du dispositif de traitement de données.

7. Procédé d'initialisation rapide d'un dispositif de traitement de données tactiques selon la revendication précédente, **caractérisé en ce que** le mot de passe du compte de gestion est lié au support d'installation.

8. Procédé d'initialisation rapide d'un dispositif de traitement de données tactiques selon l'une des revendications précédente, **caractérisé en ce qu'**une commande correspond à une action de configuration d'une application.
